# FASCICULE DE BREVET EUROPEEN

(11) **EP 0 565 469 B1**
(45) Date de publication et mention de la délivrance du brevet: **01.07.1998**
(21) Numéro de dépôt: 93460015.6
(22) Date de dépôt: 01.04.1993
(51) Int. Cl.: G07B 15/02, G07C 9/00, G07F 7/08

(54) **Système d'échange de données sans contact entre un terminal et un ensemble portatif modulaire**
System zum kontaktlosen Austausch von Daten zwischen einem Endgerät und einer modularen, tragbaren Einheit
System for the contactless exchange of data between a terminal and a modular portable unit

(30) Priorité: 08.04.1992 FR 9204480
(43) Date de publication de la demande: 13.10.1993
(73) Titulaire: INNOVATRON INDUSTRIES, Société Anonyme, F-75002 Paris (FR)
(72) Inventeur: Colnot, Cédric, F-94200 Ivry/Seine (FR)
(74) Mandataire: Dupuis-Latour, Dominique

(56) Documents cités:
- EP-A- 159 539
- EP-A- 401 192
- EP-A- 402 182
- EP-A- 424 726
- EP-A- 466 969
- DE-A- 3 637 684
- FR-A- 2 637 710
- FR-A- 2 637 749

## Description

Le domaine de l'invention est celui des échanges de données sans contact physique, c'est-à-dire par exemple par voie hertzienne ou infrarouge.

Plus précisément, l'invention concerne un système d'échange de données sans contact physique entre un ensemble portatif, généralement mobile, et un terminal ou un parc de terminaux, généralement fixe(s).

L'invention a de nombreuses applications telles que, par exemple, le contrôle d'accès physique "mains libres" pouvant être appliqué à l'identification de personnes désirant pénétrer dans un bâtiment. Dans ce cas, l'utilisateur est muni d'un ensemble portatif contenant des données d'identification. Dans l'entrée du bâtiment se trouve une borne d'émission/réception. Lorsque l'utilisateur désire pénétrer dans le bâtiment et s'approche de cette borne, l'ensemble portatif de l'usager passe d'un état de veille à un état actif. de façon qu'un dialogue. sans aucun contact physique, s'instaure entre la borne et l'ensemble portatif. Lors de ce dialogue, la borne reconnaît le type d'ensemble portatif, reçoit les données d'identification contenues dans cet ensemble portatif et autorise l'accès au bâtiment si ces données d'identification répondent aux critères exigés (par exemple. si l'utilisateur fait partie d'une liste de personnes prédéterminées).

L'invention peut également être appliquée au péage à la volée (paiement à distance), et notamment au télépéage dans un système de transport d'une agglomération. Dans ce cas. des bornes de péage sont situées aux différents points d'accès du réseau de transport. L'usager désirant accéder à ces transports en commun passe près d'une borne de péage qui active son ensemble portatif. Un dialogue, sans aucun contact physique, s'instaure entre la borne et l'ensemble portatif. Après avoir vérifié la validité des informations ainsi que des droits de transport contenus dans l'ensemble portatif, la borne enregistre le paiement du droit de transport et inscrit également cette transaction (enregistrement du débit) dans la mémoire de l'ensemble portatif. Ainsi, l'usager accède facilement aux transports et, lorsqu'il a épuisé ses droits d'accès stockés sur son ensemble portatif, il peut recharger sur celui-ci des droits de transport correspondant à des tickets ou à des abonnements.

De nombreuses autres applications seront envisagées aisément par l'homme du métier.

On connaît un ensemble portatif communiquant sans contact physique tel que décrit dans le document FR-A- 2 640 830.

L'ensemble portatif est ici constitué d'un objet portatif monobloc. Cet ensemble portatif peut par exemple être une carte à mémoire, et comprend notamment un micro-contrôleur, une électronique de transmission par induction et une pile. Cet ensemble portatif est conçu pour fonctionner selon une configuration de communication sans contact avec des bornes distantes permettant par exemple, la mise en oeuvre d'opérations de paiement à distance (télépéage).

Ce type d'ensemble portatif, constitué d'une carte pouvant échanger des données sans contact physique avec un terminal, présente l'inconvénient majeur d'être dédié à un type d'application prédéterminé.

En d'autres termes, la carte ne peut répondre à une demande et à un besoin de "transversalité", ce qui signifie qu'elle ne peut être utilisée que pour un seul type d'application et, par exemple, ne peut pas être utilisée également et parallèlement comme une carte à mémoire standard à moyens d'accouplement mécanique (carte bancaire par exemple).

On pourrait imaginer , comme dans le document EP-A-0 424 726 de munir un tel ensemble portatif de moyens d'accouplement physique afin d'autoriser en sus de la configuration de communication sans contact, une autre configuration de communication avec accouplement physique à un terminal permettant notamment le chargement, et le rechargement, de droits ou d'unités correspondant à des tickets ou à des abonnements.

Toutefois une telle version évoluée, "bi-configuration", d'ensemble portatif ne peut présenter que des fonctionnalités limitées, sauf à complexifier considérablement l'électronique intégrée dans l'ensemble, au prix d'une consommation d'énergie accrue et donc d'une autonomie réduite.

En outre, cette solution "bi-configuration" exige de concevoir et de commercialiser des modules portatifs spécifiques non compatibles avec les objets portatifs déjà existants sur le commerce, tels que les cartes à mémoires classiques.

Afin de pallier ces inconvénients, on a pu développer des ensembles portatifs modulaires tels que décrits dans les documents FR-A-2 637 749 et EP-A-0 401 192.

Ces documents de brevet décrivent un ensemble portatif séparé en deux éléments distincts, à savoir :
- d'une part, une carte à mémoire électronique standard, et
- d'autre part, un étui susceptible de recevoir la carte en contact électrique opératoire. Cet étui comporte des moyens d'émission propres à coopérer avec des moyens de réception homologues du terminal, des moyens d'alimentation, et des moyens de traitement propres à assurer l'échange de données au moins de la carte vers le terminal.

De cette façon, l'ensemble portatif constitué de la carte utilisée en combinaison avec l'étui permet d'échanger des données sans contact physique avec un terminal. Un tel ensemble portatif possède de nombreuses applications : l'identification "mains libres" pour le contrôle d'accès physique. le passage au vol de points de péage,...

Par ailleurs, dans le système du FR-A-2 637 749, sans l'étui, la carte est capable de toutes les fonctions normales, par exemple bancaires, accessibles aux cartes à mémoire standards, la carte à mémoire utilisée étant une carte à mémoire "classique".

Ceci signifie que lorsque la carte est en contact électrique opératoire avec l'étui, le dialogue entre la carte et l'étui doit s'établir suivant un protocole de dialogue prédéterminé (par exemple le protocole ISO 7816). Ce protocole nécessite une gestion d'interface qui elle-même exige la présence d'un microprocesseur dans l'étui. Après initialisation de l'échange, par émission d'une requête par l'étui, un dialogue bidirectionnel peut alors s'établir avec la carte, par l'entrée/sortie (I/O) de celle-ci en respectant le protocole.

Grâce à ce système modulaire, l'étendue des applications offertes à l'ensemble portatif est élevée.

Toutefois. on peut rencontrer dans ce type de dispositif un problème d'autonomie et de consommation, du fait par exemple qu'il est nécessaire d'alimenter tant l'étui que la carte à mémoire, et notamment le microprocesseur dans chacun de ces deux éléments accouplables.

En outre, la nécessité de prévoir que les deux éléments de l'ensemble portatif (étui + carte à mémoire) soient "intelligents", en particulier pour la mise en oeuvre du protocole d'échange des données entre eux, implique une complexité et un coût de fabrication non négligeables.

L'invention a notamment pour objectif de pallier ces inconvénients de l'état de la technique.

Plus précisément, un objectif de l'invention est de fournir un système d'échange de données sans contact physique entre un terminal et un ensemble portatif, l'ensemble portatif étant constitué de deux éléments séparés accouplables: un dispositif d'émission/réception et un objet portatif (une carte à mémoire), ce système minimisant la gestion d'interface entre le dispositif d'émission/réception et l'objet portatif qui lui est accouplable.

Un autre objectif de l'invention est de fournir un tel système qui minimise la consommation d'énergie de l'ensemble portatif, et en accroisse donc l'autonomie.

Un objectif complémentaire de l'invention est de fournir un tel système qui soit simple à réaliser et peu coûteux.

L'invention a également pour objectif de permettre que les cartes de l'ensemble puissent être utilisées par ailleurs séparément, pour d'autres fonctions, notamment en les accouplant à un dispositif d'émission/réception distinct, émettant par exemple selon un autre mode de transmission à distance (infrarouge, voie hertzienne, etc...).

Ces objectifs, ainsi que d'autres qui apparaîtront par la suite, sont atteints selon l'invention à l'aide d'un système du type enseigné par le FR-A-2 637 749 précité, et caractérisé de la manière indiquée dans la revendication 1.

La présente invention repose sur l'idée qu'une solution au problème posé ci-dessus peut être trouvé, si l'on accepte d'aller à l'encontre de l'idée qu'il faut utiliser dans l'ensemble portatif une carte à mémoire électronique standard programmée de façon classique.

En l'occurrence, du fait que les moyens de gestion du protocole d'émission/réception de l'ensemble portatif sont situés dans la carte à mémoire, il est tout à fait possible de se passer de microprocesseur dans le dispositif d'émissioniréception. En d'autres termes, au sens du protocole d'échange de données, le dispositif d'émission/réception ne possède aucune intelligence.

En comparaison de l'état de la technique, la gestion du protocole a donc été déportée dans la carte à mémoire, par une simple reprogrammation de ses moyens de traitement comme on le verra plus loin.

En revanche, les moyens d'alimentation de l'ensemble portatif sont avantageusement centralisés dans le dispositif d'émission/réception. La carte à mémoire est donc alimentée à travers ses moyens d'accouplement au dispositif d'émission/réception. Avantageusement, cette alimentation ne s'effectue sélectivement que lorsque la carte est "réveillée", et donc seulement lors des échanges de données, ce qui diminue la consommation et donc augmente l'autonomie de l'ensemble portatif.

Selon une autre caractéristique avantageuse de l'invention, le dispositif d'émission/réception comprend des moyens de connexion et d'initialisation de la carte sous commande de moyens de réveil générant une information de réveil.

Avantageusement, lesdits moyens de réveil sont constitués soit par un interrupteur manuel actionnable par l'utilisateur et/ou par des moyens de veille et de détection de la présence de l'ensemble portatif dans une zone de travail d'un terminal.

Ce dernier cas s'applique notamment aux modes d'utilisation du type mettant en oeuvre un parc de terminaux présentant chacun une zone géographique limitée de travail prédéterminée, l'ensemble portatif pouvant être situé dans ou hors de la zone de travail de chacun desdits terminaux.

Par ailleurs, il conviendra de limiter les occasions où l'utilisateur devra utiliser l'interrupteur manuel, lorsqu'il existe, pour économiser la pile de l'ensemble portatif.

Dans le cas du télépéage, l'actionnement de l'interrupteur manuel a ainsi par exemple pour seule fonction de confirmer l'accord de l'utilisateur pour le débit de sa carte à mémoire.

Selon une autre caractéristique de l'invention, le dispositif comprend des moyens de détection du bon accouplement de la carte, pilotant des moyens d'inhibition de ladite information de réveil, de façon que ladite information de réveil ne soit pas générée lorsque la carte n'est pas correctement accouplée audit dispositif d'émission/réception.

L'information de réveil est ainsi inhibée lorsqu'aucune carte à mémoire n'est accouplée au dispositif d'émission/réception, ou encore lorsque la connexion électrique entre ces deux éléments est imparfaite.

Avantageusement, ladite information de réveil est générée lors de l'entrée de l'ensemble portatif dans ladite zone de travail. De cette façon, la carte à mémoire n'est alimentée qu'une seule fois, lors de son entrée dans la zone de travaii. Lorsque l'échange de données avec le terminal est terminé, la carte ne peut plus être alimentée, à moins que l'usager sorte de la zone et y entre à nouveau.

On aura noté que la carte et le dispositif d'émission/réception échangent deux types de données :
- la carte envoie au dispositif d'émission/réception des commandes, c'est-à-dire des instructions destinées entre autres à placer le dispositif d'émission/réception en configuration d'émission ou en configuration de réception respectivement. La carte peut également envoyer des commandes correspondant à des fonctionnalités annexes du dispositif d'émission/réception, notamment des fonctionnalités d'affichage ou de test d'états (par exemple état de la pile, présence dans une zone géographique de travail d'un terminal, données composées par l'utilisateur sur un interrupteur ou sur un clavier, ...);
- par ailleurs, la carte et le terminal s'échangent des données utiles, qui transitent à travers le dispositif d'émission/réception.

Pour le traitement des commandes reçues de la carte, le dispositif d'émission/réception comporte avantageusement de simples moyens de décodage de ces commandes, constitués de circuits logiques simples.

Ces commandes peuvent être transmises au dispositif d'émission/réception soit à travers un fil distinct des moyens d'accouplement (par exemple un contact RUF (Réserve Utilisation Future)), soit à travers le même fil servant à la transmission des données utiles.

Dans ce dernier cas, il est nécessaire de prévoir des moyens de reconnaissance de la nature des informations que le dispositif d'émission/réception reçoit de la carte, par exemple en précédant les commandes d'un en-tête spécifique, comme il sera décrit ci-après à propos d'un mode de réalisation particulier de l'invention.

Avantageusement, le premier protocole est le protocole ISO 7816-3 prescrivant que le signal présent sur ledit fil d'échange de données des moyens d'accouplement doit être à un état haut après une initialisation de la carte, et ledit dispositif d'émission/réception, lorsqu'il est accouplé avec la carte, impose que le signal présent sur le fil d'échange de données des moyens d'accouplement doit être à un état bas pendant une première durée après une initialisation de la carte, lesdits moyens de reconnaissance déterminant un état de test égal à l'état du signal présent sur ledit fil d'échange de données des moyens d'accouplement après une seconde durée, ladite seconde durée étant inférieure à ladite première durée, ladite information de type de dispositif de transfert fournie par lesdits moyens de reconnaissance indiquant que le dispositif de transfert auquel est accouplé l'objet portatif est :
- soit d'un premier type, si ledit état de test est un état haut ;
- soit d'un second type (échange de données sans contact via le dispositif d'émission/réception), si ledit état de test est un état bas.

Ainsi, la carte à mémoire activera le protocole ISO 7816 lorsqu'elle sera accouplée à un terminal classique, par exemple pour son rechargement ou sa programmation, et se placera en revanche en configuration de dialogue spécifique lorsqu'elle sera accouplée à un dispositif d'émission/réception du type de l'invention.

En d'autres termes, la carte à mémoire fonctionne :
- soit conformément à la norme ISO 7816-3, selon laquelle la carte à mémoire est un périphérique esclave du dispositif de transfert qui est ici un lecteur classique ;
- soit selon les procédures adaptées à une liaison radio sans contact, où la carte à mémoire est maîtresse du dispositif de transfert qui est ici le dispositif d'émission/réception dans lequel elle est insérée.

D'autres caractéristiques et avantages de l'invention apparaîtront à la lecture de la description suivante d'un mode de réalisation préférentiel de l'invention donné à titre illustratif et non limitatif et des dessins annexés dans lesquels :
- la figure 1 est un schéma simplifié représentant les modules fonctionnels principaux d'un système suivant l'invention composé d'un terminal, et d'un ensemble portatif à carte et dispositif d'émission/réception accouplables ;
- la figure 2 est un schéma logique d'un mode de réalisation préférentiel des moyens de décodage situés dans le dispositif d'émission/réception, pour le décodage des commandes d'émission/réception reçues de la carte, dans le cas où les commandes et les données sont transmises sur un fil unique ;
- les figures 3A, 3B sont des schémas logiques de décodage des données et des commandes reçues par le dispositif d'émission/réception en provenance de la carte, dans le cas où les commandes d'émission/réception et les données utiles sont transmises sur deux fils différents ;
- la figure 4 présente un exemple de fonctionnement de la carte du système selon l'invention avec un premier type de dispositif de transfert, à savoir un lecteur ISO 7816-3 ;
- la figure 5 présente un exemple de fonctionnement de la carte du système selon l'invention avec un second type de dispositif de transfert, à savoir un dispositif d'émission/réception du système selon l'invention ;
- la figure 6 présente un schéma bloc permettant d'expliquer la détermination du choix d'un des deux modes de fonctionnement d'une carte selon l'invention ;
- la figure 7 présente des chronogrammes permettant d'expliquer le fonctionnement des moyens de reconnaissance du type de dispositif de transfert auquel est accouplée la carte à mémoire.

Dans la suite de la description, on fera référence au contexte de télépéage dans les transports en commun, mais il est clair que l'invention ne se limite pas à cette application particulière. L'invention s'applique également au contrôle d'accès physique "mains libres", ou toute autre application requérant un échange de données sans contact physique.

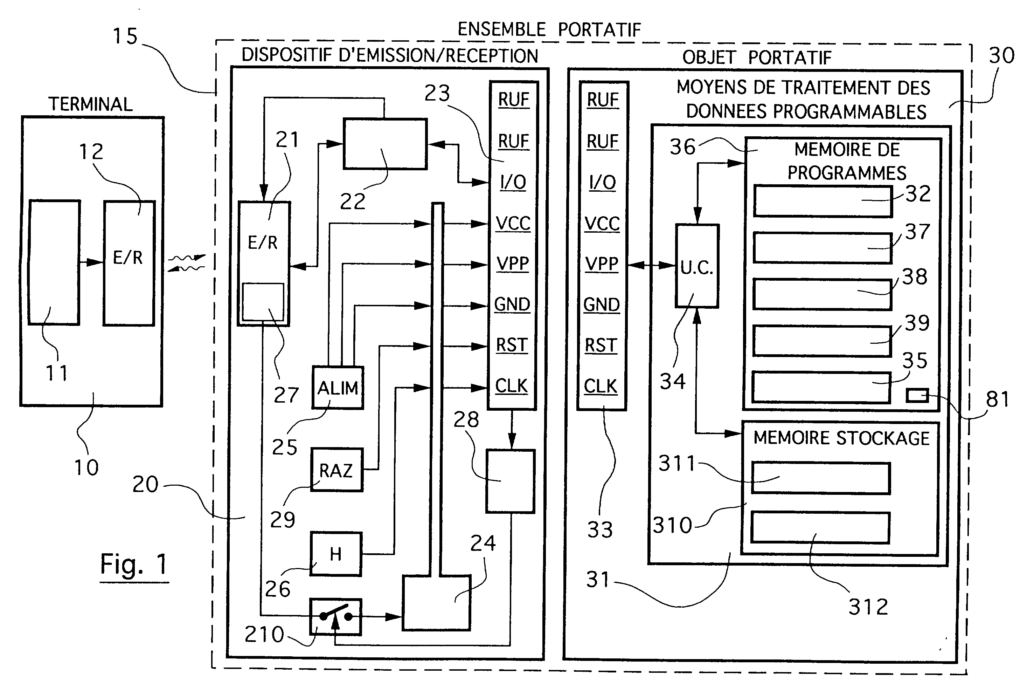

La figure 1 présente un schéma simplifié d'un tel système d'échange de données qui comporte d'une part un terminal 10 et d'autre part un ensemble portatif 15. L'ensemble portatif 15 est constitué d'un dispositif d'émission/réception 20 et d'une carte 30.

Le terminal 10 comprend des moyens d'émission/réception 12, ces moyens d'émission/réception 12 étant pilotés par des moyens 11 de mise en oeuvre du protocole d'échange de données entre le terminal 10 et l'ensemble portatif 15.

Le dispositif d'émission/réception 20 comprend :
- des moyens d'émission/réception 21 compatibles avec ceux 12 situés sur le terminal 10. Dans le cas d'une transmission hertzienne, ces moyens d'émission/réception sont essentiellement constitués par des moyens de modulation/démodulation de la fréquence porteuse. On peut notamment utiliser des moyens d'émission/réception du même type que ceux du document FR-A-2 640 830 ;
- des moyens 22 de décodage de commandes émises par la carte 30 ;
- des moyens 23 d'accouplement avec la carte 30 ,
- des moyens 24 de connexion, déconnexion et d'initialisation de la carte 30 ;
- des moyens 25 d'alimentation de l'ensemble portatif constitués soit par une pile, soit par des moyens de téléalimentation, l'ensemble portatif recevant alors son énergie d'alimentation par le signal transmis par le terminal.
- des moyens 26 de génération d'un signal d'horloge ;
- des moyens 27 de réveil (veille et détection de la présence dans une zone de travail) ;
- des moyens 28 de détection du bon accouplement de la carte,
- des moyens 29 de génération d'un signal de remise à zéro de la carte 30.

La carte 30 comprend des moyens de traitement de données programmables 31, une unité centrale 34, des moyens 33 d'accouplement au dispositif d'émission/réception, une mémoire de programmes 36 et une mémoire de stockage 310.

La mémoire de programmes 36 comprend :
- des moyens 38 de traitement de données utiles échangées entre l'ensemble portatif 15 et le terminal 10 ;
- des moyens 32 de gestion de protocoles comprenant notamment d'une part le protocole d'émission/réception de l'ensemble portatif, et d'autre part le protocole 150 permettant à la carte à mémoire de communiquer avec un dispositif de transfert classique (lecteur standard) ;
- des moyens 37 de génération de commande d'émission/réception à destination du dispositif d'émission/réception 20, les moyens 37 de génération de commande étant pilotés par les moyens 32 de gestion de protocole ;
- des moyens 39 de traitement des données annexes provenant directement du dispositif d'émission/réception 20 ;
- des moyens 35 de reconnaissance de la nature du dispositif ;
- des moyens 81 de sélection d'un des protocoles.

Les moyens d'accouplement 23, 33 du dispositif d'émission/réception 20 et de la carte 30 comprennent huit contacts :
- un contact d'entrée/sortie (I/O) ;
- un contact d'alimentation haute (VPP) ;
- un contact d'alimentation basse (VCC) ;
- un contact de masse (GND) ;
- un contact d'horloge (CLK) ;
- un contact de remise à zéro (RST) ;
- deux contacts RUF (Réservé Utilisation Future).

Les contacts d'alimentation haute et basse ainsi que le contact de masse sont reliés aux moyens d'alimentation 25. Le contact d'horloge est reiié aux moyens de génération d'horloge 26. Le contact de remise à zéro est relié aux moyens de génération d'un signal de remise à zéro.

La carte 30 pilote le dispositif d'émission/réception grâce à des commandes. Ces commandes émises par la carte 30 sont décodées par le dispositif d'émission/réception 20 et lui permettent de se configurer soit en émission, soit en réception. Une autre commande permet également à la carte 30 de se mettre elle-même hors tension, en commandant les moyens 24 de connexion. Enfin, différentes commandes de test permettent à la carte 30 de savoir si elle se trouve dans une zone géographique de travail, ou de tester l'état de la pile 25.

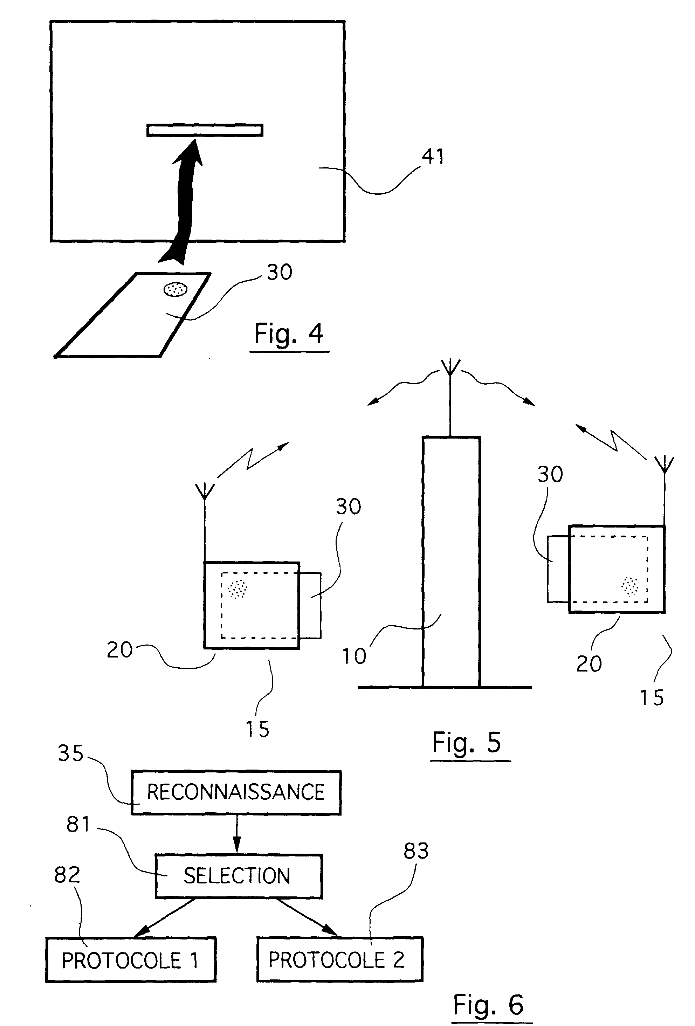

Comme présenté en relation avec les figures 4 et 5, dans le cas de la mise en oeuvre d'un système selon l'invention dans un système de télépéage, par exemple dans un système de transport public, le déroulement d'échanges de données est le suivant. L'usager possède une carte type carte à mémoire 30 dans laquelle il peut charger des unités de droit d'accès au transport en accouplant sa carte 30 à un lecteur ISO (référencé 41 sur la figure 4). Lorsqu'il désire accéder aux transports en commun, il insère sa carte à mémoire 30 dans le dispositif d'émission/réception 20, et conserve sur lui l'ensemble portatif 15 constitué de la carte 30 et du dispositif d'émission/réception 20, par exemple dans une de ses poches.

Afin d'accéder aux transports en commun, l'usager doit passer près d'un terminal de paiement 10 présentant une zone géographique limitée de travail prédéterminée. Ce terminal 10, par l'intermédiaire de ses moyens d'émission 12, émet en permanence un signal à destination des ensembles portatifs 15 des différents usagers.

Si l'usager possédant un ensemble portatif 15 est effectivement situé dans cette zone de travail, les moyens de réveil 27 situés dans le dispositif d'émission/réception 20 vont connecter et initialiser la carte 30 par l'intermédiaire des moyens d'accouplement 23, 33. Cette étape de connexion correspond à une mise sous tension qui consiste à fournir à la carte 30 les alimentations haute et basse, le signal de masse, le signal de remise à zéro, et le signal d'horloge.

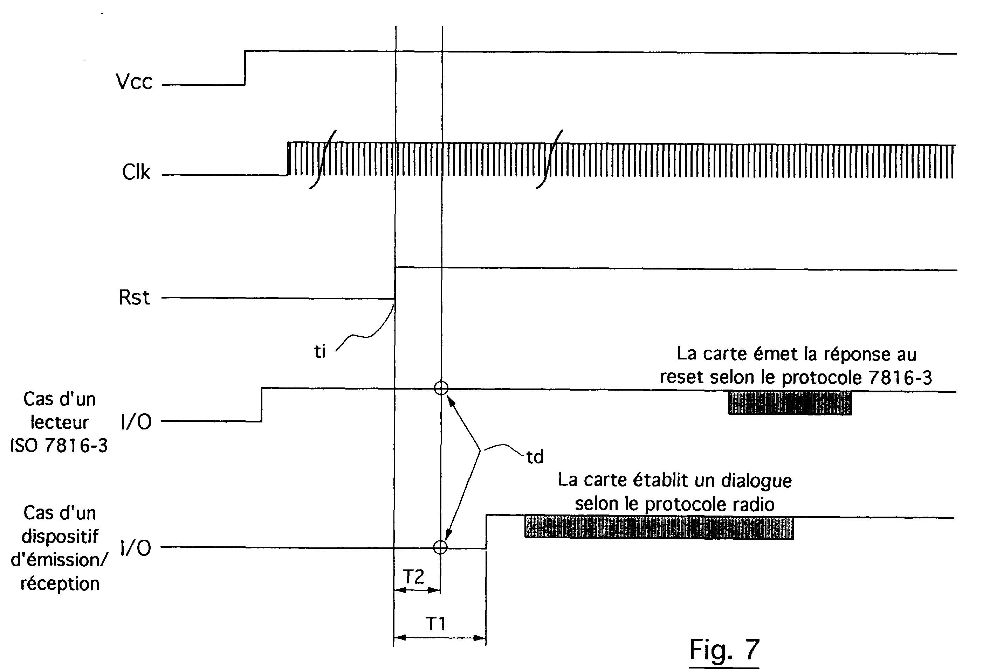

Après avoir été réveillée, la carte 30 doit reconnaître le type de dispositif avec lequel elle est accouplée. Il peut s'agir d'un dispositif d'émission/réception 20 selon l'invention ou de tout autre type de lecteur, un lecteur 41 ISO par exemple. Cette étape de reconnaissance est présentée en relation avec les figures 6 et 7.

Comme présenté sur le schéma bloc de la figure 6, les moyens 35 de reconnaissance (de la nature du dispositif de transfert auquel est accouplée la carte à mémoire) fournissent une information du type de dispositif de transfert aux moyens 81 de sélection d'un des deux protocoles 82, 83 gérés par les moyens 32 de gestion.

Dans la suite de la description, on considère que la carte à mémoire fonctionne :
- soit selon le protocole ISO 7816-3, lorsqu'elle est connectée à un lecteur classique ISO et constitue un périphérique esclave de ce lecteur ;
- soit selon un protocole radio, lorsqu'elle est connectée à un dispositif d'émission/réception selon l'invention et est maître de celui-ci.

La figure 7 présente des chronogrammes des signaux :
- d'alimentation basse V_{CC} ;
- d'horloge CLK ;
- de remise à zéro RST ; et
- d'entrée/sortie :
   ∗ dans le cas où la carte est accouplée à un lecteur ISO 7816-3;
   ∗ dans le cas où la carte est accouplée à un dispositif d'émission/réception.

Dans le cas où la carte est accouplée à un lecteur ISO, le protocole 7816-3 prescrit que le signal I/O doit être égal à l'état haut après l'initialisation de la carte (instant tᵢ).

Au contraire, dans le cas où la carte est accouplée à un dispositif d'émission/réception selon l'invention. le signal I/O est à l'état bas pendant une durée T1 suivant l'instant tᵢ.

Le principe mis en oeuvre dans l'invention consiste à scruter la valeur du signal présent sur le contact d'entrée/sortie (I/O), lors d'un instant t_{d} de décision du mode de fonctionnement, après une durée T2 suivant l'instant tᵢ, T2 étant inférieur à T1.

Si le signal I/O prend la valeur "1",il s'agit d'un lecteur ISO, dans le cas contraire, il s'agit d'un dispositif d'émission/réception 20.

Si la carte est effectivement accouplée à un dispositif d'émission/réception 20, l'échange de données avec le terminal 10 peut débuter suivant un protocole prédéterminé. Ainsi, suivant un protocole d'échange préférentiel, dès qu'elle est réveillée la carte à mémoire 30 doit configurer le dispositif d'émission/réception 20 en réception. Pour cela, la carte à mémoire 30 envoie au dispositif d'émission/réception une commande de mise en configuration de réception. Le dispositif d'émission/réception 20 décode cette commande puis configure ses moyens d'émission/réception 21 en réception. Cela lui permet de recevoir les premières données émises par le terminal 10 distant. Puis, avant d'envoyer une réponse au terminal 10, la carte à mémoire 30 doit configurer le dispositif d'émission/réception 20 en émission, en envoyant la commande idoine au dispositif d'émission/réception 20. La carte à mémoire 30 envoie alors les données de réponse suivant le protocole d'échange de données devant être mis en oeuvre, puis reconfigure le dispositif d'émission/réception 20 en réception, de façon à pouvoir recevoir la prochaine requête réponse en provenance du terminal 10.

Avantageusement, les premières données échangées entre le terminal 10 et la carte 30 sont des informations d'identification matérielle.

L'échange de données entre le terminal 10 et la carte à mémoire 30 continue ensuite de la même façon suivant le nombre d'étapes requises dans le protocole.

Lorsque l'échange de données est terminé, c'est-à-dire lorsque la carte à mémoire a été débitée dans cet exemple, la carte à mémoire envoie une commande au dispositif d'émission/réception de façon à être déconnectée et donc à économiser l'énergie d'alimentation.

De plus, la connexion de la carte à mémoire 30 au dispositif d'émission/réception n'est plus possible, à moins que l'usager sorte de la zone de travail. En fait c'est l'entrée dans la zone qui réveille la carte à mémoire 30 et non pas la simple présence dans la zone. Ainsi, on s'assure physiquement que la carte ne peut être débitée qu'une fois.

Selon que la carte à mémoire 30 émet des données ou des commandes vers le dispositif d'émission/réception 20, les moyens de traitement de données programmables, construits autour d'un microprocesseur, utilisent des données ou des commandes stockées dans une mémoire 37 de ce même microprocesseur.

Lorsque l'usager a utilisé tous les droits de transport stockés sur sa carte à mémoire, il peut recharger celle-ci. L'opération de chargement ou de rechargement de droits de transport correspondant à des tickets ou à des abonnements peut être effectuée sur un lecteur de carte standard utilisant un protocole d'échange de données ISO 7816. Par ailleurs, on peut imaginer que la même carte à mémoire serve également à d'autres applications, du type porte-monnaie électronique. La carte à mémoire reconnait la nature du dispositif auquel elle est accouplée grâce aux moyens 35 de reconnaissance dont le fonctionnement a été expliqué auparavant.

Les moyens 28 de détection du bon accouplement de la carte à mémoire 30 avec le dispositif d'émission/réception 20 commande les moyens 210 d'inhibition de l'information de réveil, de façon que l'information de réveil ne soit pas générée lorsque la carte à mémoire 30 n'est pas correctement accouplée au dispositif d'émission/réception 20.

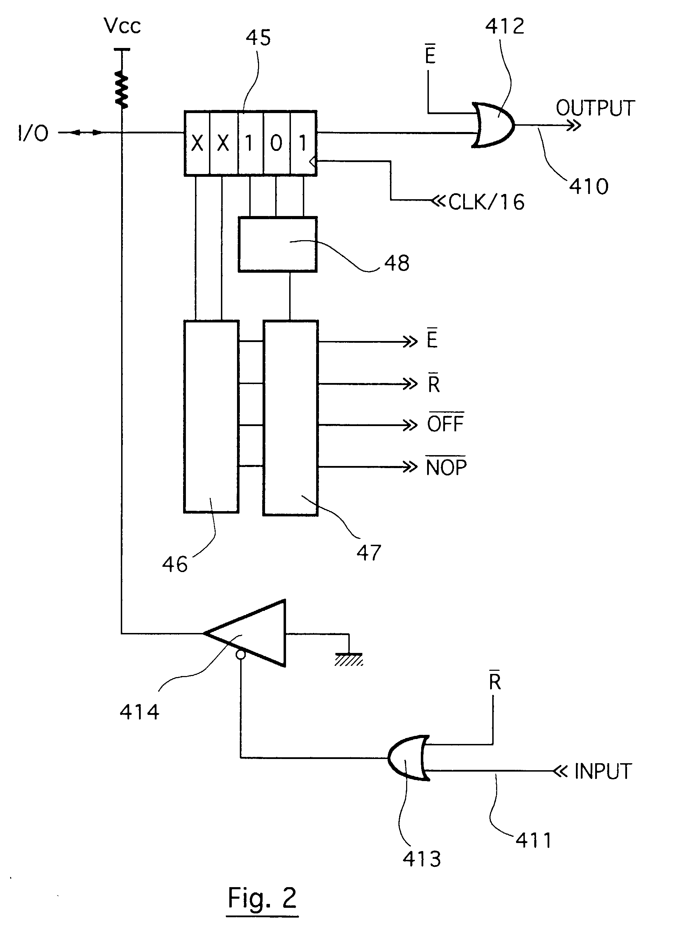

La figure 2 est un schéma logique d'un premier mode de réalisation des moyens de décodage situés dans le dispositif d'émission/réception. Ce premier mode de réalisation correspond à un décodage des commandes d'émission/réception reçues de la carte, dans le cas où les commandes et les données sont transmises sur un fil unique. Ce fil unique correspond aux contacts d'entrée/sortie (I/O) du dispositif d'émission/réception 20 et de la carte 30. A travers ce fil unique, la carte à mémoire peut émettre soit des commandes destinées au dispositif d'émission/réception, soit des données destinées au terminal.

De façon que le dispositif d'émission/réception reconnaisse les commandes émises par la carte à mémoire, la carte émet les données et les commandes à deux vitesses différentes. Les données sont échangées suivant un mode asynchrone semi-duplex et à une première vitesse. La carte transmet ses commandes au dispositif d'émission/réception suivant un mode synchrone, ce qui est possible puisque la carte et le dispositif d'émission/réception partagent le même signal d'horloge (CLK), et à une seconde vitesse de transmission beaucoup plus rapide que la première.

Le registre à décalage 45 reçoit un signal d'horloge (CLK/16) correspondant à la vitesse de transmission des commandes.

Ces commandes sont structurées en mots de commande. Chaque mot de commande comprend :
- un en-tête constitué d'une séquence d'éléments binaires présentant au moins deux transitions d'état ;
- au moins un élément binaire de commande, chaque valeur prise par ie ou les éléments binaires de commande correspondant à une commande particulière.

Dans le cas de la figure 2, l'en-tête est constitué de trois éléments binaires, (101), les commandes proprement dites étant codées sur deux éléments binaires, ce qui permet de coder quatre commandes différentes.

Une commande émise par la carte à mémoire à destination du dispositif d'émission/réception est transmise en série par le fil d'entrée/sortie (I/O) vers un registre à décalage 45. Le déroulement du décodage est alors le suivant.

Un module 46 de décodage de commande proprement dit reconnaît, parmi les quatre combinaisons possibles des deux premiers bits du registre à décalage 45, la commande effectivement envoyée par la carte à mémoire.

Par ailleurs, les trois autres bits du registre à décalage 45 sont scrutés en permanence par des moyens de validation de commande 48; lorsque la valeur de ces trois bits correspond à la séquence binaire 101, c'est-à-dire lorsque ces trois bits correspondent à un en-tête de mot de commande, les moyens de validation de commande 48 activent les moyens de mémorisation de commande 47. Dès lors, des moyens de mémorisation de commande 47 délivrent un signal actif à l'état bas sur l'une des quatre sorties, chaque sortie correspondant à une des quatre commandes possibles.

Dans notre exemple, les quatre commandes possibles sont :
- les deux commandes de configuration des moyens d'émission/réception du dispositif en émission, respectivement en réception (E/, respectivement R/);
- une commande visant à déconnecter la carte à mémoire du dispositif d'émission/réception (OFF/) ;
- une commande n'engendrant aucune opération (NOP/).

L'homme du métier pourra aisément passer de cet exemple, dans lequel chaque commande est codée sur deux bits, à d'autres exemples où les commandes sont codées sur plus de deux bits et sont donc plus nombreuses.

En particulier, on peut imaginer de nombreuses commandes permettant, par exemple, de tester l'état de la pile, la présence dans une zone de travail, ou d'aller lire d'autres registres reliés à un clavier ou à un écran d'affichage.

La carte à mémoire émet également des données à destination des terminaux via le dispositif d'émission/réception. Cette étape d'émission de données doit être précédée d'une étape consistant à envoyer un mot de commande de façon à configurer les moyens d'émission/réception en émission.

Les données sont structurées en mots de données, chaque mot de données comprenant un bit de début, des bits de données, un bit de parité et un bit de fin de mot.

La vitesse de transmission des commandes étant très supérieure à celle des données, et le décalage du registre 45 étant effectué à une vitesse identique à celle de la transmission des commandes, les mots de données ne sont pas confondus avec les mots de commande. En effet, la séquence binaire correspondant à l'entête d'un mot de commande (dans notre exemple 101), ne peut jamais se trouver dans les trois derniers bits du registre à décalage. Même si la séquence binaire de l'entête de commande (101) se trouve dans le train binaire de données, cette séquence ne se trouvera pas reproduite de façon identique dans le registre à décalage 45. Du fait de l'écart entre la vitesse de transmission des données et la vitesse de décalage du registre 45, un bit de données sera reproduit plusieurs fois dans le registre. Par exemple, s'il existe un rapport deux entre les deux vitesses, une séquence binaire de données 101 se trouvera sous la forme 110011 dans le registre à décalage 45.

Le dispositif d'émission/réception étant configuré en émission. les mots de données transitent par le fil d'entrée/sortie (I/O), puis à travers le registre à décalage 45, avant d'arriver sur la sortie émission (OUTPUT) 410. Cette sortie (OUTPUT) 410 est inactive à l'état haut. La sélection de la ligne de sortie consiste simplement à effectuer un "OU" (412) entre la commande (E/) et la sortie du registre à décalage 45. Ainsi, la ligne de sortie (OUTPUT) 410 est à l'état haut, sauf lorsque la commande E/ est à l'état bas. Dans ce dernier cas, l'état de la ligne de sortie (OUTPUT) 410 correspond au train binaire sortant du registre à décalage 45. Le passage à travers le registre à décalage 45 est transparent pour les données, jusqu'à réception d'une nouvelle commande.

La carte à mémoire émet des commandes ou des données, mais peut également recevoir des données venant du terminal.

La carte à mémoire peut effectivement recevoir des données seulement si elle a auparavant configuré les moyens d'émission/réception en réception, en envoyant la commande appropriée au dispositif d'émission/réception.

Les moyens d'émission/réception reçoivent les données venant du terminal (INPUT). De même que la ligne de sortie (OUTPUT) 410, la ligne d'entrée (INPUT) 411 est connectée à une entrée d'un "OU" 413, l'autre entrée correspondant à la commande R/.

Lorsque le dispositif d'émission/réception est configuré en réception (commande R/ à l'état bas), la sortie du "OU" correspond au signal d'entrée (INPUT) 411.

Le fil d'entrée/sortie (I/O) est partagé entre l'émission et la réception grâce à un montage classique, comprenant un tampon de sortie trois états 414. La commande de ce tampon 414 est reliée à la sortie du "OU" 413 et son entrée est toujours à l'état bas. Ainsi, lorsqu'un bit de donnée de valeur "0" est reçu, il commande le tampon 414 de façon que sa sortie soit égale à son entrée, à savoir "0" puisque cette entrée est reliée à la masse. Le fil I/O reçoit cette valeur "0".Par contre, lorsqu'un bit de donnée de valeur "1"est reçu, il commande le tampon 414 de façon que sa sortie soit en haute impédance. Le fil I/O reçoit alors la valeur "1" grâce à la résistance câblée avec l'alimentation VCC (en anglais : résistance de "pull-up").

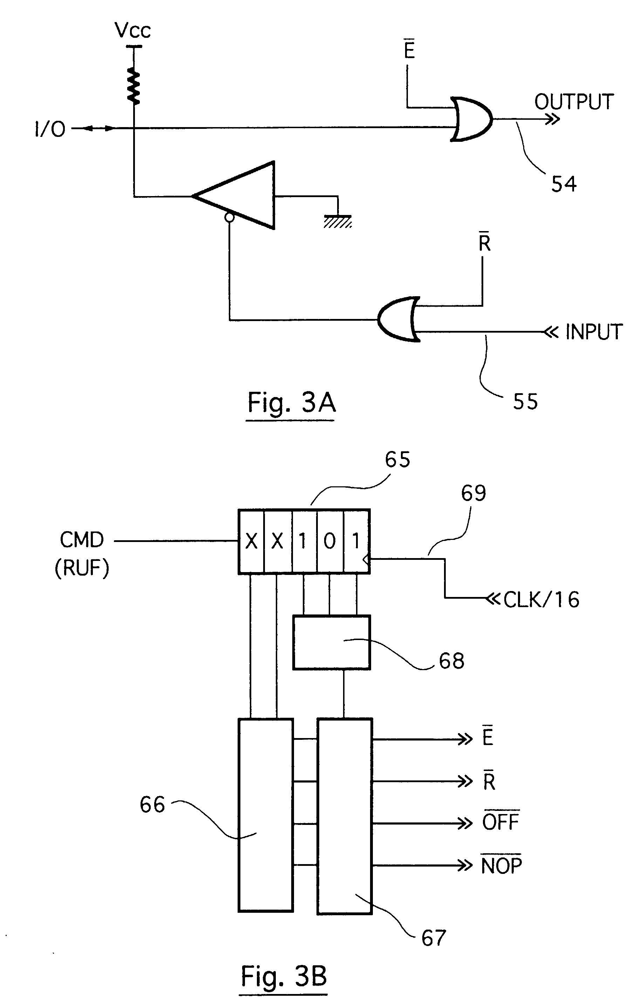

Les figures 3A et 3B présentent des schémas logiques de décodage de données dans le cas où les commandes d'émission/réception et les données utiles sont transmises sur deux fils différents.

La figure 3B correspond au décodage des commandes proprement dit. Les commandes sont émises par la carte à mémoire sur un fil réservé aux commandes (CMD). Ce fil correspond à un des contacts RUF (Réservé Utilisation Future). Les moyens de décodage sont identiques à ceux expliqués en relation avec la figure 2, c'est-à-dire comprennent un registre à décalage 65, des moyens de validation de commande 68, des moyens de décodage de commande 66 et des moyens 67 de mémorisation de commande. Ces moyens 67 de mémorisation de commande possèdent quatre sorties correspondant respectivement aux quatre types de commande existant dans notre exemple (E/, R/, OFF/, NOP/). Le registre à décalage est piloté par un signal d'horloge 69. Comme dans l'exemple présenté en relation avec la figure 2, la carte transmet ces commandes au dispositif d'émission/réception de manière synchrone, ce qui est possible puisque la carte à mémoire et le dispositif d'émission/réception partagent la même horloge (CLK). La vitesse de communication est, par exemple, fixée à CLK/16. Cette vitesse correspond au débit maximum de la carte à mémoire.

En particulier, les signaux de commande (E/ et R/) correspondant à la configuration du dispositif d'émission/réception en émission, respectivement en réception, commandent des circuits logiques tels que représentés sur la figure 3A. Dans ce mode de réalisation, les données à émettre vers le terminal sont véhiculées uniquement par le fil d'entrée/sortie (I/O). Si le dispositif d'émission/réception est effectivement configuré en émission, c'est-à-dire si le signal E/ est actif,les données sont émises sur la sortie (OUTPUT) 54.

De même, lorsque le terminal désire envoyer des mots de données vers la carte à mémoire, le dispositif d'émission/réception doit être configuré en réception, c'est-à-dire que le signal R/ doit être actif. Les mots de données venant du terminal (INPUT 55) peuvent alors être transmis à la carte à mémoire via le fil d'entrée/sortie (I/O).

## Revendications

1. Un ensemble portatif (15) pour échanger des données sans contact physique avec un terminal (10) à l'aide d'un protocole d'échange de données prédéterminé, l'ensemble portatif comprenant des moyens (21) d'émission/réception pilotés par des moyens (32) de gestion du protocole, cet ensemble portatif comprenant:
- un dispositif d'émission/réception (20) comprenant : lesdits moyens (21) d'émission/réception ; et des moyens (23) d'accouplement avec une carte ; et
- une carte (30) comprenant : des moyens (33) d'accouplement permettant d'assurer un transfert de données bidirectionnel avec au moins deux types de dispositifs de transfert différents, dont le dispositif d'émission/réception ; et des moyens programmables (31) de traitement de données, réalisés sous forme de microstructures logiques;
le dispositif d'émission/réception et la carte pouvant être soit séparés, soit accouplés l'un à l'autre à l'aide des moyens (23, 33) d'accouplement du dispositif et de la carte,
ensemble portatif caractérisé en ce que la carte comprend des moyens (35) de reconnaissance de la nature du type de dispositif de transfert (20, 41) auquel elle est accouplée à travers les moyens d'accouplement de la carte, et en ce que les moyens programmables (31) de traitement de données de la carte comprennent :
- des moyens (38) de traitement des données utiles échangées entre l'ensemble portatif (15) et le terminal (10) ;
- des premiers moyens d'échange de données, avec un dispositif de transfert d'un premier type, selon un premier protocole ;
- des seconds moyens d'échange de données avec ledit terminal, selon un second protocole correspondant audit protocole d'échange de données prédéterminé, pour échanger des données à travers ledit dispositif d'émission-réception qui constitue un dispositif de transfert d'un second type ;
- lesdits moyens (32) de gestion du protocole d'échange de données de l'ensemble portatif; et
- des moyens (37) de génération de commandes d'émission/réception à destination des moyens (21) d'émission/réception, ces moyens de génération de commandes étant pilotés par lesdits moyens de gestion du protocole ;
- des moyens de sélection des premiers ou des seconds moyens d'échange de données, opérant en réponse aux moyens de reconnaissance.

2. Ensemble portatif selon la revendication 1, caractérisé en ce que le dispositif d'émission/réception comprend des moyens (22) de décodage des commandes d'émission/réception, les moyens de décodage étant constitués de circuits logiques dépourvus de microprocesseur.

3. Ensemble portatif selon la revendication 1, caractérisé en ce que les données sont structurées en mots encadrés par un bit de début et un bit de détection et/ou de correction d'erreur, et un bit de fin de mot.

4. Ensemble portatif selon la revendication 1, caractérisé en ce que les commandes sont structurées en mots comprenant chacun un en-tête constitué d'une séquence d'éléments binaires, et au moins un élément binaire de commande, chaque valeur prise par le ou les éléments binaires de commande correspondant à l'une des commandes.

5. Ensemble portatif selon la revendication 1, caractérisé en ce que les commandes appartiennent au groupe comprenant : commande de configuration du dispositif d'émission/réception en émission ; commande de configuration du dispositif d'émission/réception en réception ; commande de moyens de connexion, déconnexion et d'initialisation de la carte ; commande de test de la présence de l'ensemble portatif dans une zone géographique de travail ; et commande de test de moyens d'alimentation.

6. Ensemble portatif selon la revendication 1, caractérisé en ce que:
- le premier protocole est le protocole ISO 7816-3 prescrivant que le signal présent sur le fil d'échange de données des moyens d'accouplement doit être à un état haut après une initialisation de la carte,
- le dispositif d'émission/réception, lorsqu'il est accouplé avec la carte, est agencé pour imposer que le signal présent sur le fil d'échange de données des moyens d'accouplement doit être à un état bas pendant une première durée après une initialisation de la carte, et
- les moyens de reconnaissance sont agencés pour déterminer un état de test égal à l'état du signal présent sur le fil d'échange de données des moyens d'accouplement après une seconde durée, la seconde durée étant inférieure à la première durée, l'information de type de dispositif de transfert fournie par les moyens de reconnaissance indiquant que le dispositif de transfert auquel est accouplé la carte est soit du premier type si l'état de test est un état haut, soit du second type si l'état de test est un état bas.

7. Ensemble portatif selon la revendication 1, caractérisé en ce que le dispositif d'émission/réception comprend des moyens (24) de connexion et d'initialisation de la carte sous commande de moyens (27) de réveil générant une information de réveil.

8. Ensemble portatif selon la revendication 7, pour échanger des données avec au moins un terminal couvrant une zone géographique limitée de travail prédéterminée, l'ensemble portatif pouvant être situé dans cette zone ou hors de cette zone, caractérisé en ce que les moyens de réveil sont constitués par des moyens de veille et de détection de la présence de l'ensemble portatif dans la zone.

9. Ensemble portatif selon la revendication 8, caractérisé en ce que l'information de réveil est générée lors de l'entrée de l'ensemble portatif dans la zone.

10. Ensemble portatif selon la revendication 7, caractérisé en ce que les moyens de réveil sont constitués par un interrupteur manuel actionnable par l'utilisateur.

11. Ensemble portatif selon la revendication 7, caractérisé en ce que le dispositif d'émission/réception comprend des moyens (26) de détection du bon accouplement de la carte, pilotant des moyens (210) d'inhibition de l'information de réveil de façon que l'information de réveil ne soit pas générée lorsque la carte n'est pas correctement accouplée au dispositif d'émission/réception.

12. Ensemble portatif selon la revendication 1, caractérisé en ce que les données à émettre et les commandes d'émission/réception sont échangées entre la carte et le dispositif d'émission/réception à travers un fil unique des moyens d'accouplement.

13. Ensemble portatif selon la revendication 1, caractérisé en ce que les données utiles sont échangées entre la carte et le dispositif d'émission/réception à travers un fil distinct du fil de transmission des commandes d'émission/réception.

14. Ensemble portatif selon la revendication 1, caractérisé en ce que les moyens d'alimentation (25) de l'ensemble portatif sont centralisés dans le dispositif d'émission/réception, la carte étant alimentée à travers les moyens d'accouplement.

## Patentansprüche

1. Tragbare Einheit (15), um Daten ohne physischen Kontakt mit einem Terminal (10) mit Hilfe eines vorbestimmten Protokolls zum Datenaustausch auszutauschen, wobei die tragbare Einheit Emissions-/Empfangs-Einrichtungen (21) aufweist, die durch Einrichtungen (32) zur Verwaltung des Protokolls gesteuert werden, und wobei diese tragbare Einheit aufweist:
- eine Emissions-/Empfangs-Vorrichtung (20), die aufweist: die Emissions-/Empfangs-Einrichtungen (21); und Einrichtungen (23) zum Ankoppeln mit einer Karte; und
- eine Karte (30), die aufweist: Einrichtungen (33) zum Ankoppeln, die erlauben, eine bidirektionelle Datenübertragung mit zumindest zwei unterschiedlichen Typen von Übertragungsvorrichtungen zu gewährleisten, darunter die Emissions-/Empfangsvorrichtung; und programmierbare Einrichtungen (31) zur Datenverarbeitung, die in Form von logischen Mikrostrukturen ausgeführt sind; die Emissions-/Empfangs-Vorrichtung und die Karte können entweder getrennt sein oder aneinander mit Hilfe von Einrichtungen (23, 33) zum Ankoppeln der Vorrichtung und der Karte gekoppelt sein,
wobei die tragbare Einheit dadurch gekennzeichnet ist, daß
die Karte Einrichtungen (35) zur Erkennung der Art des Typs der Übertragungsvorrichtung (20, 41), an die sie über die Einrichtungen zum Ankoppeln der Karte gekoppelt ist, aufweist und dadurch, daß die programmierbaren Einrichtungen (31) zur Datenverarbeitung der Karte aufweisen:
- Einrichtungen (38) zur Verarbeitung von nützlichen Daten, die zwischen der tragbaren Einheit (15) und dem Terminal (10) ausgetauscht werden;
- erste Einrichtungen zum Austauschen von Daten mit einer Übertragungsvorrichtung von einem ersten Typ gemäß einem ersten Protokoll;
- zweite Einrichtungen zum Austauschen von Daten mit dem Terminal gemäß einem zweiten Protokoll, das dem vorbestimmten Datenaustauschprotokoll entspricht, um Daten über die Emissions-/Empfangs-Vorrichtung auszutauschen, die eine Übertragungsvorrichtung von einem zweiten Typ bildet;
- die Einrichtungen (32) zur Verwaltung des Protokolls zum Austausch von Daten der tragbaren Einheit; und
- Einrichtungen (37) zum Erzeugen von Emissions-/Empfangs-Befehlen, die für die Emissions-/Empfangs-Einrichtungen (21) bestimmt sind, wobei diese Einrichtungen zum Erzeugen von Befehlen durch die Einrichtungen zur Verwaltung des Protokolls gesteuert sind;
- Einrichtungen zur Auswahl der ersten und zweiten Einrichtungen zum Datenaustausch, die in Antwort auf Einrichtungen zur Erkennung arbeiten.

2. Tragbare Einheit gemäß Anspruch 1, dadurch gekennzeichnet, daß die Emissions-/Empfangs-Vorrichtung Einrichtungen (22) zum Dekodieren der Emissions-/Empfangs-Befehle aufweist, wobei die Einrichtungen zum Dekodieren aus logischen Schaltungen gebildet sind, die keinen Mikroprozessor enthalten.

3. Tragbare Einheit gemäß Anspruch 1, dadurch gekennzeichnet, daß die Daten in Wörtern strukturiert sind, die durch ein Empfangsbit und ein Bit zur Fehlererfassung und/oder -korrektur und ein Wortende-Bit umrahmt sind.

4. Tragbare Einheit gemäß Anspruch 1, dadurch gekennzeichnet, daß die Befehle in Wörtern strukturiert sind, die jeweils einen Kopfteil aufweisen, der durch eine Sequenz von binären Elemente gebildet ist, und zumindest ein binäres Befehlselement, wobei jeder Wert, der durch das oder die binären Befehlselemente angenommen wird, einem der Befehle entspricht.

5. Tragbare Einheit gemäß Anspruch 1, dadurch gekennzeichnet, daß die Befehle zu der Gruppe gehören, die aufweist: Befehl zur Konfiguration der Emissions-/Empfangs-Vorrichtung auf Emission; Befehl zur Konfiguration der Emissions-/Empfangs-Vorrichtung auf Empfang; Befehl für die Einrichtungen zur Verbindung, Unterbrechung und Initialisierung der Karte, Befehl zum Test der Anwesenheit der tragbaren Einheit in einem geographischen Arbeitsbereich; und Befehl zum Test der Versorgungseinrichtung.

6. Tragbare Einheit gemäß Anspruch 1, dadurch gekennzeichnet, daß
- das erste Protokoll das Protokoll ISO 7816-3 ist, das vorschreibt, daß das Signal, das auf dem Draht zum Austausch von Daten der Ankopplungseinrichtungen anliegt, nach einer Initialisierung der Karte in einem hohen Zustand sein muß,
- die Emissions-/Empfangs-Vorrichtung, wenn sie an die Karte angekoppelt ist, eingerichtet ist, um zu bestimmen, daß das Signal, das an dem Draht zum Datenaustausch der Ankopplungseinrichtungen anliegt, während einer Dauer nach einer Initialisierung der Karte in einem niedrigen Zustand sein muß, und
- die Einrichtungen zum Erkennen eingerichtet sind, um einen Testzustand zu bestimmen, der gleich einem Zustand des Signals ist, das an dem Draht zum Datenaustausch der Ankopplungseinrichtungen nach einer zweiten Dauer anliegt, wobei die zweite Dauer kleiner als die erste Dauer ist und wobei die Information über den Typ der Übertragungsvorrichtung, die durch die Erkennungseinrichtungen geliefert wird, anzeigt, daß die Übertragungsvorrichtung, an die die Karte angekoppelt ist, entweder vom ersten Typ ist, wenn der Zustand des Testes ein hoher Zustand ist, oder vom zweiten Typ, wenn der Zustand des Testes ein niedriger Zustand ist.

7. Tragbare Einheit gemäß Anspruch 1, dadurch gekennzeichnet, daß die Emissions-/Empfangs-Vorrichtung Einrichtungen (24) zur Verbindung und zur Initialisierung der Karte unter Steuerung der Weckeinrichtungen (27) aufweist, die eine Weckinformation erzeugen.

8. Tragbare Einheit gemäß Anspruch 7, um Daten mit zumindest einem Terminal auszutauschen, das einen begrenzten, vorbestimmten geographischen Arbeitsbereich überdeckt, wobei die tragbare Einheit sich in diesem Bereich oder außerhalb dieses Bereiches befinden kann, dadurch gekennzeichnet, daß die Weckeinrichtungen durch Einrichtungen zum Überwachen und zum Erfassen der Anwesenheit der tragbaren Einheit in dem Bereich gebildet sind.

9. Tragbare Einheit gemäß Anspruch 8, dadurch gekennzeichnet, daß die Weckinformation beim Eintritt der tragbaren Einheit in den Bereich erzeugt wird.

10. Tragbare Einheit gemäß Anspruch 7, dadurch gekennzeichnet, daß die Weckeinrichtungen durch einen manuell von dem Benutzer betätigbaren Schalter betätigt sind.

11. Tragbare Einheit gemäß Anspruch 7, dadurch gekennzeichnet, daß die Emissions-/Empfangs-Vorrichtung Einrichtungen (26) zum Erfassen der guten Ankopplung der Karte aufweist, die die Einrichtungen (210) zum Sperren der Weckinformation so steuern, daß die Weckinformation nicht erzeugt wird, wenn die Karte nicht korrekt mit der Emissions-/Empfangs-Vorrichtung gekoppelt ist.

12. Tragbare Einheit gemäß Anspruch 1, dadurch gekennzeichnet, daß die Daten, die ausgesandt werden sollen, und die Emissions-/Empfangs-Befehle zwischen der Karte und der Emissions-/Empfangs-Vorrichtung über einen einzigen Draht der Ankopplungseinrichtungen ausgetauscht werden.

13. Tragbare Einheit gemäß Anspruch 1, dadurch gekennzeichnet, daß die nützlichen Daten zwischen der Karte und der Emissions-/Empfangs-Vorrichtung über einen Draht ausgetauscht werden, der unterschiedlich von dem Übertragungsdraht der Emissions-/Empfangs-Befehle ist.

14. Tragbare Einheit gemäß Anspruch 1, dadurch gekennzeichnet, daß die Versorgungseinrichtungen (25) der tragbaren Einheit in der Emissions-/Empfangs-Vorrichtung zentralisiert sind, wobei die Karte über die Ankopplungseinrichtungen versorgt wird.

## Claims

1. A portable unit (15) for interchanging data without physical contact with a terminal (10) by means of a predetermined data interchange protocol, the portable unit comprising transceiver means (21) controlled by protocol management means (32), said portable unit comprising:
^{•} a transceiver (20) comprising: said transceiver means (21); and coupling means (23) for coupling with a card; and
^{•} a card (30) comprising: coupling means (33) enabling bidirectional data transfer with at least two different types of transfer device, including the transceiver device; and programmable data processing means (31) implemented in the form of logic microstructures;
the transceiver device and the card being capable of being either separate or coupled to each other by coupling means (23, 33) for coupling together the device and the card,
the portable unit being characterized in that the card comprises recognition means (35) for recognizing the nature of the type of transfer device (20, 41) with which it is coupled via the coupling means of the card, and in that the programmable data processing means (31) of the card comprise:
^{•} means (38) for processing useful data interchanged between the portable unit (15) and the terminal (10);
^{•} first data interchange means for interchange with a transfer device of a first type using a first protocol;
^{•} second data interchange means for interchanging data with said terminal using a second protocol corresponding to said predetermined data interchange protocol for interchanging data via said transceiver device which constitutes a transfer device of a second type;
^{•} said protocol management means (32) for managing the data interchange protocol of the portable unit;
^{•} command generation means (37) for generating transmit/receive commands for the transceiver means (21), said command generator means being controlled by said protocol management means; and
^{•} means for selecting first or second data interchange means, operating in response to the recognition means.

2. A portable unit according to claim 1, characterized in that the transceiver device comprises decoder means (22) for decoding transmit/receive commands, the decoder means being constituted by logic circuits without a microprocessor.

3. A portable unit according to claim 1, characterized in that the data is structured into words framed by a start bit and an error detection and/or correction bit, and by an end-of-word bit.

4. A portable unit according to claim 1, characterized in that the commands are structured into words each comprising a header constituted by a bit sequence, and at least one command bit, each value taken by the command bit(s) corresponding to one of the commands.

5. A portable unit according to claim 1, characterized in that the commands belong to the group comprising: a command for configuring the transceiver device to transmit; a command for configuring the transceiver device to receive; a command for the connection, disconnection, and initialization means of the card; a command for testing the presence of the portable unit in a geographical working area; and a command for testing power supply means.

6. A portable unit according to claim 1, characterized in that:
^{•} the first protocol is the ISO 7816-3 protocol specifying that the signal present on the data interchange wire of the coupling means must be in a high state after initialization of the card;
^{•} the transceiver device, when coupled with the card is arranged to ensure that the signal present on the data interchange wire of the coupling means is in a low state during a first period after initialization of the card; and
^{•} the recognition means are organized to determine a test state equal to the state of a signal being present on the data interchange wire of the coupling means after a second duration, the second duration being shorter than the first duration, the information concerning the type of transfer device supplied by the recognition means indicating that the transfer device to which the card is coupled is either of the first type if the test state is a high state, or else of the second type if the test state is a low state.

7. A portable unit according to claim 1, characterized in that the transceiver device comprises means (24) for connecting and initializing the card under the control of activation means (27) that generate activation information.

8. A portable unit according to claim 7, to interchange data with at least one terminal covering a limited predetermined working geographical area, the portable unit being capable of being situated inside said zone or outside said zone and being characterized in that the activation means are constituted by surveillance means for detecting the presence of the portable unit in the area.

9. A portable unit according to claim 8, characterized in that the activation information is generated when the portable unit enters the area.

10. A portable unit according to claim 7, characterized in that the activation means are constituted by a manual switch actuatable by the user.

11. A portable unit according to claim 7, characterized in that the transceiver device comprises means (26) for detecting proper coupling of the card, controlling means (210) for inhibiting activation information so that activation information is not generated while the card is not properly coupled to the transceiver device.

12. A portable unit according to claim 1, characterized in that the data to be transmitted and the transmit/receive commands are interchanged between the card and the transceiver device via a single wire of the coupling means.

13. A portable unit according to claim 1, characterized in that the useful data is interchanged between the card and the transceiver device via a wire that is distinct from the wire for transmitting transmit/receive commands.

14. A portable unit according to claim 1, characterized in that the power supply means (25) of the portable unit are centralized in the transceiver device, the card being powered via its coupling means.
